# EUROPEAN PATENT SPECIFICATION

(11) **EP 3 582 629 B1**
(45) Date of publication and mention of the grant of the patent: **01.11.2023**
(21) Application number: 18704252.8
(22) Date of filing: 14.02.2018
(51) Int. Cl.: A23L 13/00, A23L 13/70, A23L 13/40, A23D 9/02, C11C 3/10

(54) **MARINADE**
MARINADE
MARINADE

(30) Priority: 15.02.2017 EP 17275019
(43) Date of publication of application: 25.12.2019
(73) Proprietor: Bunge Loders Croklaan B.V., 1521 AZ Wormerveer (NL)
(72) Inventor: DE LIMA, Christopher Mark, 1521 AZ Wormerveer (NL); MA, Jun, 1521 AZ Wormerveer (NL); THERON, Karin Alicia, 1521 AZ Wormerveer (NL)
(74) Representative: Potter Clarkson
(86) International application number: PCT/EP2018/053688
(87) International publication number: WO 2018/149880

(56) References cited:
- EP-A1- 1 439 758
- EP-A1- 2 636 313
- WO-A1-2007/090477
- WO-A1-2011/161213
- US-A1- 2016 302 460
- "Bailey's industrial oil & fat products, vol. 3 - Edible oil and fat products: products and application technology ED - HUI Y H (ED)", 1 January 1996 (1996-01-01), BAILEY'S INDUSTRIAL OIL AND FAT PRODUCTS. EDIBLE OIL AND FAT PRODUCTS : PRODUCTS AND APPLICATION TECHNOLOGY, NEW YORK, NY : JOHN WILEY, US, PAGE(S) 382, XP002112226, ISBN: 978-0-471-59427-7 abstract

## Description

This invention relates to a fat composition, a marinade comprising the fat composition and a method for its production.

Shea oil (butter) is a fat obtained from the shea tree. The butter is sometimes fractionated to form a stearin fraction (shea stearin) and an olein fraction (shea olein). Shea products are used in cosmetics and in the food industry. Shea oil is relatively rich in stearic and oleic acids.

A marinade is a mixture of ingredients, in which meat, fish, or other food is soaked before cooking in order to flavour and/or soften it. Typically, marinades comprise oil, wine, spices, vegetables or similar ingredients. Marinades are usually applied to refrigerated food and the marinating process usually takes place at refrigerator temperatures of about 5 °C for a period of several hours.

Marinades are described in, for example, US 2016/302460.

Fats and oils are important components of food products and can be responsible for texture, mouthfeel and flavor attributes. For instance, the solid fat profile can affect properties such as flavor release and structure.

Fats and oils contain glycerides. Glycerides may be in the form of mono-, di- or tri- glycerides having one, two or three fatty acid acyl groups, respectively, bonded to a glycerol backbone. Triglycerides are the predominant type of glyceride in edible fats and oils.

Fats and oils are sometimes subjected to an interesterification process which randomises the fatty acid acyl residues amongst the glyceride molecules. This can alter the physical properties of the fat or oil. Usually, interesterification is carried out in order to effect complete randomisation of the fatty acid acyl groups.

US 4482576 describes the directed interesterification of an edible oil. The process is carried out under low temperature conditions such that some of the oil is in the solid phase. This results in a product that does not have complete randomization of the fatty acid residues but has a partially randomised distribution of the fatty acids depending on the composition of the liquid and solid oil phases at the time of randomization.

There remains a need for improved marinades, in particular having good consistency and/or viscosity both at refrigeration temperatures and at room temperature, so that the marinade has sufficient flowability to be applied to food when taken out of a refrigerator, and to be reapplied at refrigerator temperatures, and yet which does not run off the food at higher room temperatures.

According to the present invention, there is provided a fat composition comprising:
greater than 45% by weight oleic acid;
from 10% to 35% by weight stearic acid; and
from 1% to 10% by weight palmitic acid;
said percentages of acids referring to acids bound as acyl groups in glycerides in the fat composition and being based on the total weight of C8 to C24 fatty acids; and greater than 5% by weight of combined P₂St, PSt₂ and StStSt triglycerides based on total triglycerides present in the composition, and a weight ratio of (StOSt+POSt):(StStSt+PStSt) triglycerides of less than 3, wherein P is palmitic acid, O is oleic acid and St is stearic acid.

The fat composition of the invention has been found to be particularly useful as a fat for a marinade. For example, the fat composition imparts good rheological properties to the marinade, generally in a blend with one or more liquid oils, allowing the marinade to be applied at refrigeration temperatures but to generally retain consistency at higher temperatures.

Also provided by the invention is a process for making the fat composition of the invention, which comprises chemically interesterifying a fat at a temperature of from 30 to 50 °C.

Further provided by the invention is a marinade comprising the fat composition of the invention, preferably in an amount of from 1% to 99% by weight, and optionally one or more ingredients selected from herbs, spices and vegetables.

in another aspect, the invention provides the use of the fat composition of the invention in a marinade.

In a further aspect, the invention provides a method of preparing a food product which comprises contacting the marinade of the invention with food for cooking, preferably with raw meat, and cooking the marinated food.

The term "fat" refers to glyceride fats and oils containing fatty acid acyl groups and does not imply any particular melting point. The term "oil" is used synonymously with "fat". Fats predominantly comprise triglycerides.

Amounts of triglycerides specified herein are percentages by weight based on total triglycerides present in the fat composition. The notation triglyceride XYZ denotes triglycerides having fatty acid acyl groups X, Y and Z at any of the 1-, 2- and 3- positions of the glyceride. The notation A₂B includes both AAB and ABA, and AB₂ includes both ABB and BAB. Triglyceride content may be determined for example by GC (ISO 23275).

The term "fatty acid", as used herein, refers to straight chain saturated or unsaturated (including mono- and poly- unsaturated) carboxylic acids having from 8 to 24 carbon atoms. A fatty acid having n carbon atoms and x double bonds may be denoted Cn:x. For example, palmitic acid may be denoted C16:0 and oleic acid may be denoted C18:1. Percentages of fatty acids in compositions referred to herein include acyl groups in tri-, di- and mono- glycerides present in the glycerides as is customary terminology in the art and are based on the total weight of C8 to C24 fatty acids. The fatty acid profile (i.e., composition) may be determined, for example, by fatty acid methyl ester analysis (FAME) using gas chromatography according to ISO 15304.

The fat composition of the invention comprises greater than 45% by weight oleic acid based on the total weight of C8 to C24 fatty acids. Preferably, the fat composition comprises from 50% to 75% by weight oleic acid, such as from 50% to 70% by weight or from 51 to 60% by weight oleic acid.

The fat composition of the invention comprises from 10% to 35% by weight stearic acid. Preferably, the fat composition comprises from 15% to 35% by weight stearic acid, such as from 25% to 30% by weight stearic acid.

The fat composition of the invention comprises from 1% to 10% by weight palmitic acid, preferably from 4% to 10% by weight palmitic acid.

The linoleic (C18:2) acid content of the fat compositions of the invention is preferably from 2% to 10% by weight.

The fat compositions of the invention preferably contain less than 10% by weight of total C20 to C24 fatty acids, more preferably less than 8% by weight, such as less than 5% by weight. Additionally, or alternatively, the fat compositions of the invention may comprise less than 1% by weight C8 to C14 fatty acids.

A preferred fatty acid composition for the fat compositions of the invention therefore comprises, based on the total weight of C8 to C24 fatty acids:
from 50% to 75% by weight oleic acid;
from 15% to 35% by weight stearic acid;
from 4% to 10% by weight palmitic acid;
from 2% to 10% by weight linoleic (C18:2) acid; and
preferably less than 5% by weight of total C20 to C24 fatty acids and/or less than 1% by weight C8 to C14 fatty acids.

The fat composition of the invention comprises greater than 5% by weight of combined P₂St, PSt₂ and StStSt triglycerides based on total triglycerides present in the composition, and a weight ratio of (StOSt+POSt):(StStSt+PStSt) triglycerides of less than 3.

Preferably, the fat composition comprises greater than 7%, more preferably from 7% to 25% by weight of combined P₂St, PSt₂ and StStSt triglycerides, such as from 10% to 20% by weight.

The weight ratio of (StOSt+POSt):(StStSt+PStSt) triglycerides is preferably in the range of from 0.5 to 2.

Preferably, the fat composition has a PSt₂ content of greater than 2% by weight, more preferably from 2% to 8% by weight.

The PPP content of the fat compositions of the invention is preferably less than 1% by weight, more preferably less than 0.5% by weight.

The POP content of the fat compositions is preferably less than 5% by weight, more preferably less than 3% by weight, such as less than 2% by weight.

Preferably, the fat compositions have a StOSt content of less than 20% by weight, such as from 5% to 15% by weight.

The OOO content of the fat composition is preferably from 10% to 45% by weight.

Accordingly, a preferred triglyceride composition for the fat composition of the invention comprises:
from 7% to 25% by weight of combined P₂St, PSt₂ and StStSt triglycerides;
from 2% to 8% by weight PSt₂;
less than 0.5% by weight PPP;
less than 5% by weight POP;
from 5% to 15% by weight StOSt;
wherein the weight ratio of (StOSt+POSt):(StStSt+PStSt) triglycerides is in the range of from 0.5 to 2.

A most preferred fat composition of the invention therefore comprises based on the total weight of C8 to C24 fatty acids:
from 50% to 75% by weight oleic acid;
from 15% to 35% by weight stearic acid;
from 4% to 10% by weight palmitic acid;
from 2% to 10% by weight linoleic (C18:2) acid; and
less than 5% of total C20 to C24 fatty acids;
and the triglyceride composition of the fat composition comprises:
   from 7% to 25% by weight of combined P₂St, PSt₂ and StStSt triglycerides;
   from 2% to 8% by weight PSt₂;
   less than 0.5% by weight PPP;
   less than 5% by weight POP;
   from 5% to 15% by weight StOSt;
   wherein the weight ratio of (StOSt+POSt):(StStSt+PStSt) triglycerides is in the range of from 0.5 to 2.

The fat compositions of the invention are typically non-hydrogenated. The fat composition is usually derived from vegetable fats.

The fat compositions of the invention are preferably free of added trans fatty acids. Typically, the fat compositions have a trans fatty acid content of less than 1% by weight.

The fat compositions of the invention may be made from naturally occurring or synthetic fats, fractions of naturally occurring or synthetic fats, or mixtures thereof, that satisfy the requirements for fatty acid and triglyceride composition defined herein. A preferred composition of the invention comprises, consists essentially of, or consists of an interesterified shea olein. Alternatively, the fat composition may comprise, consist essentially of, or consist of an interesterified stearin fraction of high stearic high oleic sunflower oil or an interesterified high stearic high oleic sunflower oil. The fat composition may also comprise, consist essentially of, or consist of mixtures of an interesterified shea olein with an interesterified stearin fraction of high stearic high oleic sunflower oil or an interesterified high stearic high oleic sunflower oil.

The fat composition of the invention preferably has a solid fat content defined by an N0 value of from 10 to 40, more preferably from 15 to 40, and an N35 of from 5 to 20. The compositions preferably also have an N20 of from 5 to 25, more preferably from 10 to 25. N10 is preferably also from 5 to 25, more preferably from 10 to 25. N40 is preferably from 3 to 20, more preferably from 5 to 20. N-values (Solid Fat content (SFC)) are determined using NMR spectroscopy according to the IUPAC 2.150a method.

The fat composition of the invention is preferably made by a process which comprises chemically interesterifying a fat at a temperature of from 30 to 50 °C. Directed interesterification in this way results in a non-random distribution of fatty acids across the triglycerides. Preferably, the interesterification is carried out chemically, more preferably using sodium methoxide as catalyst. The interesterification is preferably carried out for at least 200 hours, such as from 200 to 400 hours.

The fat that is interesterified in the process of the invention is preferably a shea olein or a stearin fraction of high stearic high oleic sunflower oil. Shea olein having the required fatty acid composition can be produced by fractionation of shea oil (butter) by conventional methods such as dry fractionation or solvent fractionation. Similarly, high stearic high oleic sunflower oil can be fractionated by dry fractionation or solvent fractionation to obtain a stearin fraction having the fatty acid composition required for a fat composition according to the invention.

Thus, a preferred process of the invention for making the fat composition of the invention comprises chemically interesterifying a fat, preferably a shea olein or a stearin fraction of high stearic high oleic sunflower oil, at a temperature of from 30 to 50 °C in the presence of sodium methoxide for at least 200 hours.

The fat composition of the invention is preferably used in a marinade. Therefore, the present invention also provides a marinade comprising from 1 to 99% by weight of the fat composition of the invention, preferably from 5% to 30% by weight.

Also provided by the invention is the use of a fat composition of the invention for improving the consistency of a marinade. Consistency can be compared, for example, using a Bostwick Consistometer (CSC Scientific Company, Inc).

Preferably, the fat in the marinade comprises or consists of a combination of the fat composition of the invention and one or more liquid oils (i.e., oils that are fully liquid at 20 °C). Such a combination is also referred to herein as a marinade oil blend. Suitable edible liquid oils include, for example, rapeseed oil, canola oil, sunflower oil, olive oil, soybean oil, safflower oil, sesame oil, peanut oil, coconut oil, palm oil and mixtures thereof. The marinade oil blend preferably comprises liquid oil in an amount of from 70% to 95% by weight, more preferably from 80% to 90% by weight. The marinade oil blend preferably comprises the fat composition of the invention in an amount of from 5% to 30% by weight, more preferably from 10% to 20% by weight.

Marinades comprising the fat composition of the invention preferably comprise the marinade oil blend in an amount of from 50% to 99% by weight, and from 1 to 50% by weight of one or more further ingredients, preferably selected from herbs, spices, salt and vegetables. The marinade preferably comprises up to 20% by weight vegetables (e.g., garlic, onion, peppers (Capsicum)) and/or up to 15% by weight spices (e.g., chilli, paprika, pepper (Piperaceae)). The marinade preferably comprises salt in an amount of from 1% to 10% by weight, such as from 2% to 6% by weight.

A preferred marinade according to the invention comprises:
from 5% to 50% by weight of the fat composition of the invention;
from 50% to 95% by weight of one or more liquid oils;
up to 20% by weight vegetables (e.g., garlic, onion, peppers (Capsicum));
up to 15% by weight spices (e.g., chilli, pepper (Piperaceae)); and
from 1% to 10% by weight salt, such as from 2% to 6% by weight.

Marinades of the invention are prepared by a process comprising mixing a fat composition of the invention with one or more liquid oils and one or more ingredients selected from herbs, spices and vegetables. Preferably, the marinades are packaged, for example in a bottle or jar.

A method of preparing a food product comprises contacting the marinade of the invention with food for cooking, preferably with raw meat, and cooking the marinated food. Suitable foods for marinating with the marinade of the invention include, for example, chicken, turkey, duck, goose, beef, veal, pork, lamb, fish and bean curd.

The listing or discussion of an apparently prior-published document in this specification should not necessarily be taken as an acknowledgement that the document is part of the state of the art or is common general knowledge.

In the examples and throughout this specification, all percentages, parts and ratios are by weight unless indicated otherwise.

### Examples

### Example 1

5 kilogram shea olein was chemically interesterified by mixing with sodium methoxide at 90°C to 110°C, followed by reaction at 37°C to 44°C for at least 200 hours. The analytical results for the product are shown in Table 1.

### Example 2

5 kilogram of a stearin fraction obtained from high stearic high oleic sunflower oil by dry fractionation was chemically interesterified by mixing with sodium methoxide at 90°C to 110°C, followed by reaction at 37°C to 44°C for at least 200 hours. The analytical results for the product are shown in Table 1.

The products of Examples 1 and 2 contain the functionality to replace hydrogenated oils and fats as a crystallization/structuring agent in a fat formulation. The performance is better than the product made by standard interesterification at a temperature of about 90°C-110°C.

The physical characteristics of different fat compositions and analytical data are given in the following table compared to shea olein and the stearin fraction of high stearic high oleic sunflower oil interesterified by a standard method:

**Table 1**

| | Example 1 | Example 2 | Interesterified Shea Olein* | Interesterified high stearic high oleic sunflower oil stearin* |
|---|---|---|---|---|
| C8:0 | 0 | 0 | 0 | 0 |
| C10:0 | 0 | 0 | 0 | 0 |
| C12:0 | 0.4 | 0.1 | 0.1 | 0.1 |
| C15:0 | 0 | 0 | 0 | 0 |
| C14:0 | 0.2 | 0.1 | 0.1 | 0.1 |
| C16:0 | 6.8 | 7.7 | 4.7 | 7.8 |
| C16:1C | 0.1 | 0.1 | 0.1 | 0.1 |
| C16:1T | 0 | 0 | 0 | 0 |
| C17:0 | 0.1 | 0.1 | 0.1 | 0.1 |
| C18:0 | 29.9 | 25.4 | 30.2 | 25.2 |
| C18:1 | 51.9 | 58 | 54.3 | 58 |
| C18:1T | 0.1 | 0.1 | 0.1 | 0.1 |
| C18:1C | 51.8 | 57.9 | 54.2 | 58 |
| C18:2 | 8.1 | 3.8 | 8.3 | 3.8 |
| C18:2T | 0.2 | 0.1 | 0.3 | 0.1 |
| C18:2C | 7.9 | 3.7 | 8 | 3.7 |
| C18:3 | 0.3 | 0.1 | 0.1 | 0.1 |
| C18:3T | 0.2 | 0 | 0 | 0 |
| C18:3C | 0.1 | 0.1 | 0.1 | 0.1 |
| Total Trans | 0.5 | 0.3 | 0.4 | 0.2 |
| C20:0 | 1.2 | 1.7 | 1.3 | 1.7 |
| C20:1C | 0.4 | 0.1 | 0.5 | 0.1 |
| C20:2C | 0 | 0 | 0 | 0 |
| C22:0 | 0.1 | 2.3 | 0.1 | 2.3 |
| C22:1 | 0 | 0 | 0 | 0 |
| C22:1T | 0 | 0 | 0 | 0 |
| C22:1C | 0 | 0 | 0 | 0 |
| C24:0 | 0.1 | 0.4 | 0.1 | 0.4 |
| C24:1C | 0 | 0 | 0 | 0 |
| MPP | 0 | 0 | 0 | 0 |
| MOM | 0 | 0.1 | 0 | 0 |
| PPP | 0 | 0.1 | 0 | 0.2 |
| MOP | 0 | 0.2 | 0 | 0.2 |
| MLP | 0 | 0 | 0 | 0.2 |
| PPSt | 0.7 | 1.8 | 0.3 | 0.7 |
| POP | 1.4 | 0 | 0.4 | 1.3 |
| PLP | 1.3 | 0.1 | 0.2 | 0.1 |
| PStSt | 5.9 | 3.2 | 1.5 | 1.9 |
| POSt | 5.7 | 6.4 | 5.1 | 8.1 |
| POO | 6.6 | 10.1 | 5 | 9.5 |
| PLSt | 0.8 | 0.4 | 0.8 | 0.5 |
| PLO | 2.2 | 1.3 | 1.4 | 1.2 |
| PLL | 0.3 | 0.2 | 0 | 0.2 |
| StStSt | 12.8 | 6.2 | 2.8 | 2.1 |
| StOSt | 7.6 | 10.1 | 17.6 | 14.2 |
| StOO | 17.5 | 23.3 | 27.8 | 27.5 |
| StLSt | 0 | 0 | 1.6 | 0.4 |
| OOO | 18.3 | 24.4 | 16.4 | 20.5 |
| StLO | 5 | 2.6 | 7.6 | 3 |
| OLO | 7.8 | 4.2 | 6.5 | 3.5 |
| StLL | 0.4 | 0.1 | 0.6 | 0.1 |
| OLL | 1.1 | 0.2 | 0.8 | 0.7 |
| AStSt | 1.3 | 1.2 | 0.3 | 0 |
| AOSt | 0.6 | 1.5 | 1.2 | 2.1 |
| AOO | 1 | 1.3 | 1.1 | 1.5 |
| ALSt | 0.4 | 0 | 0.1 | 0.1 |
| SUMSOS | 14.6 | 16.4 | 23 | 23.5 |
| US-N0 | 27 | 31 | 28 | 37 |
| US-N5 | 23 | 26 | 23 | 31 |
| US-N10 | 20 | 20 | 15 | 26 |
| U S-N 15 | 18 | 18 | 11 | 24 |
| US-N20 | 19 | 18 | 8 | 18 |
| US-N25 | 19 | 17 | 7 | 11 |
| US-N30 | 17 | 13 | 5 | 7 |
| US-N35 | 15 | 11 | 3 | 5 |
| US-N40 | 13 | 8 | 2 | 3 |

| | | | | |
|---|---|---|---|---|
| * standard interesterification in the presence of sodium methoxide at a temperature of about 90°C-110°C | | | | |

In the above table:
Cx:y refers to a fatty acid having x carbon atoms and y double bonds;
C refers to cis fatty acids and T to trans fatty acids; levels determined by GC-FAME;
M, O, P, St, L and A refer to myristic, oleic, palmitic, stearic, linoleic and arachidic acids, respectively;
triglyceride composition MPP, etc, was determined by GC (ISO 23275) and includes triglycerides having the same fatty acids in different positions e.g., MPP includes MPP and PMP;
SUMSOS refers to total SOS (S is stearic or palmitic acid and O is oleic acid); and US-Nx refers to solid fat content determined by NMR on unstabilised fat at x°C.

The composition is also summarized in the following table:

| | C16:0 | C18:0 | C18:1 | P₂St | PSt₂ | StStSt | P2St+ PSt2+ StStSt | POSt | StOSt | (StOSt+POSt)/ (PSt₂+StStSt) |
|---|---|---|---|---|---|---|---|---|---|---|
| Example 1 | 6.8 | 29.9 | 51.9 | 0.7 | 5.9 | 12.8 | 19.4 | 5.7 | 7.6 | 0.7 |
| Example 2 | 7.7 | 25.4 | 58 | 1.8 | 3.2 | 6.2 | 11.2 | 6.4 | 10.1 | 1.8 |
| Interesterified Shea Olein | 4.7 | 30.2 | 54.3 | 0.3 | 1.5 | 2.8 | 4.6 | 5.1 | 17.6 | 5.3 |
| Interesterified high stearic high oleic sunflower oil stearin | 7.8 | 25.2 | 58 | 0.7 | 1.9 | 2.1 | 4.7 | 8.1 | 14.2 | 5.6 |

### Example 3

The following four marinade oil blends were prepared for evaluating the properties of a marinade oil blend prepared with interesterified shea olein and interesterified high stearic high oleic sunflower oil stearin compared to marinade oil blends prepared with Example 1 and Example 2. The oil blends were heated to 75°C and passed through a scraped surface heat exchanger and pin-rotor. The viscosity of the products was controlled by controlling the outlet temperature of the blends (8-10°C.). The resultant partially crystallized blends were collected and left to stand at room temperature (ca. 20°C) for 24 hours.

| | Composition (by weight) |
|---|---|
| Marinade oil blend A | 15% Example 1 + 85% Rapeseed oil |
| Marinade oil blend B | 15% Example 2 + 85% Rapeseed oil |
| Marinade oil blend C | 15% interesterified shea olein + 85% Rapeseed oil |
| Marinade oil blend D | 15% interesterified high stearic high oleic sunflower oil stearin + 85% Rapeseed oil |

### Example 4

The consistency of the marinade oil blends stored at 4°C and 20°C was compared in duplicate using a Bostwick Consistometer. The results were reported as the distance travelled (cm) in 30 seconds. The difference between the scores at 4°C and 20°C was calculated and the results are given in the following Table.

| | Difference cm |
|---|---|
| Marinade oil blend A | 1.8 |
| Marinade oil blend B | 5.0 |
| Marinade oil blend C | 13.0 |
| Marinade oil blend D | 10.0 |

The performance of marinade oil blends containing the fats of Example 1 and Example 2 (Marinade oil blends A and B) performed better compared to the fats made by standard interesterification (Marinade oil blends C and D). Both marinade oil blend B and marinade oil blend A could be successfully used in oil-based marinades.

### Example 5

The thickness of the marinade oil blends stored at 4°C and 20°C was visually evaluated on a scale of 0 (water) to 10 (peanut butter) by a qualified panel of 6 people. The evaluation was repeated twice and the average calculated. The difference between the scores at 4°C and 20°C was calculated. The performance of marinade oil blends containing the fats of Example 1 and Example 2 (Marinade oil blends A and B) performed better compared to the products made by standard interesterification (Marinade oil blends C and D).

### Example 6

Two different marinades were prepared using the marinade oil blends. The formulations are shown in the table below.

| Formulation 1: Italian marinade | Formulation 2: Spicy marinade |
|---|---|
| 80% Marinade oil | 70% Marinade oil |
| 10% Vegetables (Garlic, Onion) | 10% Vegetables (Bell pepper, Garlic, Red onion) |
| 6% Herbs (Oregano, Basil, Thyme) | 10% Spices (Chilli, Pepper, Coriander, Cumin) |
| 4% Salt | 5% Herbs (Coriander leaves) |
| | 5% Salt |

## Claims

1. Fat composition comprising:
greater than 45% by weight oleic acid;
from 10% to 35% by weight stearic acid; and
from 1% to 10% by weight palmitic acid;
said percentages of acids referring to acids bound as acyl groups in glycerides in the fat composition and being based on the total weight of C8 to C24 fatty acids; and
greater than 5% by weight of combined P₂St, PSt₂ and StStSt triglycerides based on total triglycerides present in the composition, and a weight ratio of (StOSt+POSt):(StStSt+PStSt) triglycerides of less than 3, wherein P is palmitic acid, O is oleic acid and St is stearic acid.

2. Fat composition as claimed in Claim 1, comprising from 50% to 75% by weight oleic acid.

3. Fat composition as claimed in Claim1 or Claim 2 comprising from 15% to 35% by weight stearic acid.

4. Fat composition as claimed in any one of the preceding claims, comprising from 4% to 10% by weight palmitic acid.

5. Fat composition as claimed in any one of the preceding claims, comprising from 7% to 25% by weight of combined P₂St, PSt₂ and StStSt triglycerides.

6. Fat composition as claimed in any one of the preceding claims, having a weight ratio of (StOSt+POSt):(StStSt+PStSt) triglycerides in the range of from 0.5 to 2.

7. Fat composition as claimed in any one of the preceding claims, having a PSt₂ content of greater than 2% by weight.

8. Fat composition as claimed in any one of the preceding claims, which comprises or consists of an interesterified shea olein.

9. Fat composition as claimed in any one of the preceding claims, which comprises an interesterified high stearic high oleic sunflower oil or an interesterified stearin fraction of high stearic high oleic sunflower oil.

10. Fat composition as claimed in any one of the preceding claims, which consists of an interesterified high stearic high oleic sunflower oil or an interesterified stearin fraction of high stearic high oleic sunflower oil.

11. Fat composition as claimed in any one of the preceding claims, which has an N0 value of from 10 to 40 and an N35 of from 5 to 20.

12. Process for making the fat composition of any one of Claims 1 to 11, which comprises chemically interesterifying a fat at a temperature of from 30 to 50 °C.

13. Process as claimed in Claim 12, wherein the fat is a shea olein or a stearin fraction of high stearic high oleic sunflower oil.

14. Marinade comprising:
(i) from 50 to 99% by weight marinade oil blend, said blend comprising from 5 to 30% by weight of the fat composition as defined in any one of Claims 1 to 11 and from 70 to 95% by weight liquid oil selected from rapeseed oil, canola oil, sunflower oil, olive oil, soybean oil, safflower oil, sesame oil, peanut oil, coconut oil, palm oil and mixtures thereof; and
(ii) from 1 to 50% by weight of one or more further ingredients selected from herbs, spices, salt and vegetables.

15. Use of the fat composition of any one of Claims 1 to 11 in a marinade.

16. Method of preparing a food product which comprises contacting the marinade of Claim 14 with food for cooking, preferably with raw meat, and cooking the marinated food.

## Patentansprüche

1. Fettzusammensetzung, umfassend:
mehr als 45 Gew.-% Ölsäure;
von 10 bis 35 Gew.-% Stearinsäure; und
von 1 bis 10 Gew.-% Palmitinsäure;
wobei die Prozentsätze der Säuren sich auf Säuren beziehen, die als Acylgruppen in Glyceriden in der Fettzusammensetzung gebunden sind, und auf das Gesamtgewicht der C8- bis C24-Fettsäuren bezogen sind; und
mehr als 5 Gew.-% an kombinierten P₂St-, PSt₂- und StStSt-Triglyceriden, bezogen auf die in der Zusammensetzung vorhandenen Gesamttriglyceride, und ein Gewichtsverhältnis von (StOSt+POSt):(StStSt+PStSt)- Triglyceriden von weniger als 3, wobei P Palmitinsäure, O Ölsäure und St Stearinsäure ist.

2. Fettzusammensetzung nach Anspruch 1, die 50 bis 75 Gew.-% Ölsäure umfasst.

3. Fettzusammensetzung nach Anspruch 1 oder Anspruch 2, die 15 bis 35 Gew.-% Stearinsäure umfasst.

4. Fettzusammensetzung nach einem der voranstehenden Ansprüche, die 4 bis 10 Gew.-% Palmitinsäure umfasst.

5. Fettzusammensetzung nach einem der vorstehenden Ansprüche, die 7 bis 25 Gew.-% kombinierte P₂St-, PSt₂- und StStSt-Triglyceride umfasst.

6. Fettzusammensetzung nach einem der voranstehenden Ansprüche, mit einem Gewichtsverhältnis von (StOSt+POSt):(StStSt+PStSt)-Triglyceriden im Bereich von 0,5 bis 2.

7. Fettzusammensetzung nach einem der voranstehenden Ansprüche, mit einem PSt₂-Gehalt von mehr als 2 Gew.-%.

8. Fettzusammensetzung nach einem der voranstehenden Ansprüche, die ein umgeestertes Shea-Olein umfasst oder daraus besteht.

9. Fettzusammensetzung nach einem der voranstehenden Ansprüche, die ein umgeestertes Sonnenblumenöl mit hohem Stearinsäuregehalt und hohem Ölsäuregehalt oder eine umgeesterte Stearinfraktion eines Sonnenblumenöls mit hohem Stearinsäuregehalt und hohem Ölsäuregehalt umfasst.

10. Fettzusammensetzung nach einem der voranstehenden Ansprüche, die aus einem umgeesterten Sonnenblumenöl mit hohem Stearinsäuregehalt und hohem Ölsäuregehalt oder einer umgeesterten Stearinfraktion eines Sonnenblumenöls mit hohem Stearinsäuregehalt und hohem Ölsäuregehalt besteht.

11. Fettzusammensetzung nach einem der voranstehenden Ansprüche, die einen N0-Wert von 10 bis 40 und einen N35-Wert von 5 bis 20 aufweist.

12. Verfahren zur Herstellung der Fettzusammensetzung nach einem der Ansprüche 1 bis 11, das die chemische Umesterung eines Fettes bei einer Temperatur von 30 bis 50 °C umfasst.

13. Verfahren nach Anspruch 12, wobei das Fett ein Shea-Olein oder eine Stearinfraktion von Sonnenblumenöl mit hohem Stearinsäuregehalt und hohem Ölsäuregehalt ist.

14. Marinade, umfassend:
(i) von 50 bis 99 Gew.-% Marinade-Ölmischung, wobei die Mischung 5 bis 30 Gew.-% der in einem der Ansprüche 1 bis 11 definierten Fettzusammensetzung und von 70 bis 95 Gew.-% flüssiges Öl, ausgewählt aus Rapsöl, Canolaöl, Sonnenblumenöl, Olivenöl, Sojabohnenöl, Distelöl, Sesamöl, Erdnussöl, Kokosnussöl, Palmöl und Mischungen dieser, umfasst; und
(ii) von 1 bis 50 Gew.-% einer oder mehrerer weiterer Inhaltsstoffe, ausgewählt aus Kräutern, Gewürzen, Salz und Gemüse.

15. Verwendung der Fettzusammensetzung nach einem der Ansprüche 1 bis 11 in einer Marinade.

16. Verfahren zur Herstellung eines Lebensmittel-produkts, umfassend das Kontaktieren der Marinade nach Anspruch 14 mit einem zu kochenden Lebensmittel, vorzugsweise mit rohem Fleisch, und das Kochen des marinierten Lebensmittels.

## Revendications

1. Composition grasse comprenant :
plus de 45 % en poids d'acide oléique ;
de 10 % à 35 % en poids d'acide stéarique ; et
de 1 % à 10 % en poids d'acide palmitique ;
lesdits pourcentages d'acides se référant aux acides liés sous forme de groupes acyle dans les glycérides dans la composition grasse et étant basés sur le poids total des acides gras en C8 à C24 ; et
plus de 5 % en poids de triglycérides combinés P₂St, PSt₂ et StStSt sur la base des triglycérides totaux présents dans la composition, et un rapport pondéral de triglycérides (StOSt+POSt):(StStSt+PStSt) inférieur à 3, où P est l'acide palmitique, O est l'acide oléique et St est l'acide stéarique.

2. Composition grasse selon la revendication 1, comprenant de 50 % à 75 % en poids d'acide oléique.

3. Composition grasse selon la revendication 1 ou la revendication 2 comprenant de 15 % à 35 % en poids d'acide stéarique.

4. Composition grasse selon l'une quelconque des revendications précédentes, comprenant de 4 % à 10 % en poids d'acide palmitique.

5. Composition grasse selon l'une quelconque des revendications précédentes, comprenant de 7 % à 25 % en poids de triglycérides combinés P₂St, PSt₂ et StStSt.

6. Composition grasse selon l'une quelconque des revendications précédentes, ayant un rapport pondéral de triglycérides (StOSt+POSt) : (StStSt+PStSt) compris entre 0,5 et 2.

7. Composition grasse selon l'une quelconque des revendications précédentes, ayant une teneur en PSt₂ supérieure à 2 % en poids.

8. Composition grasse selon l'une quelconque des revendications précédentes, qui comprend ou consiste en une oléine de karité interestérifiée.

9. Composition grasse selon l'une quelconque des revendications précédentes, qui comprend une huile de tournesol interestérifiée à haute teneur en acide stéarique et en acide oléique ou une fraction de stéarine interestérifiée d'huile de tournesol à haute teneur en acide stéarique et en acide oléique.

10. Composition grasse selon l'une quelconque des revendications précédentes, qui consiste en une huile de tournesol interestérifiée à haute teneur en acide stéarique et en acide oléique ou en une fraction de stéarine interestérifiée d'une huile de tournesol à haute teneur en acide stéarique et en acide oléique.

11. Composition grasse selon l'une quelconque des revendications précédentes, qui a une valeur N0 de 10 à 40 et une valeur N35 de 5 à 20.

12. Procédé de préparation de la composition grasse selon l'une quelconque des revendications 1 à 11, qui comprend l'interestérification chimique d'une graisse à une température de 30 à 50 °C.

13. Procédé selon la revendication 12, dans lequel la graisse est une oléine de karité ou une fraction stéarine d'huile de tournesol à haute teneur en acide stéarique et en acide oléique.

14. Marinade comprenant :
(i) de 50 à 99 % en poids d'un mélange d'huiles de marinade, ledit mélange comprenant de 5 à 30 % en poids de la composition grasse telle que définie dans l'une quelconque des revendications 1 à 11 et de 70 à 95 % en poids d'une huile liquide choisie parmi l'huile de colza, l'huile de canola, l'huile de tournesol, l'huile d'olive, l'huile de soja, l'huile de carthame, l'huile de sésame, l'huile d'arachide, l'huile de noix de coco, l'huile de palme et des mélanges de celles-ci ; et
(ii) de 1 à 50 % en poids d'un ou plusieurs autres ingrédients choisis parmi les herbes, les épices, le sel et les légumes.

15. Utilisation de la composition grasse selon l'une quelconque des revendications 1 à 11 dans une marinade.

16. Procédé de préparation d'un produit alimentaire qui comprend le fait de mettre en contact la marinade selon la revendication 14 avec des aliments à cuire, de préférence avec de la viande crue, et la cuisson des aliments marinés.
